# EUROPÄISCHE PATENTSCHRIFT

(11) **EP 2 155 387 B1**
(45) Veröffentlichungstag und Bekanntmachung des Hinweises auf die Patenterteilung: **17.08.2011**
(21) Anmeldenummer: 08736263.8
(22) Anmeldetag: 16.04.2008
(51) Int. Cl.: B01J 23/96, B01J 38/04, B01D 53/94, F01N 3/08, B01J 23/00, B01J 23/63

(54) **ZWEISTUFIGES VERFAHREN ZUR REAKTIVIERUNG THERMISCH GEALTERTER STICKOXID-SPEICHERKATALYSATOREN**
DUAL-STAGE METHOD FOR THE REACTIVATION OF THERMALLY AGED NITROGEN OXIDE STORAGE CATALYSTS
PROCEDE EN DEUX ETAPES DE REACTIVATION DE CATALYSEURS-ACCUMULATEURS D'OXYDES D'AZOTE THERMIQUEMENT VIEILLIS

(30) Priorität: 23.05.2007 DE 102007023979
(43) Veröffentlichungstag der Anmeldung: 24.02.2010
(73) Patentinhaber: Umicore AG & Co. KG, 63457 Hanau-Wolfgang (DE)
(72) Erfinder: ECKHOFF, Stephan, 63755 Alzenau (DE); WITTROCK, Meike, 63599 Biebergemuend (DE); GOEBEL, Ulrich, 65795 Hattersheim (DE); GRISSTEDE, Ina, 68165 Mannheim (DE); HOYER, Ruediger, 63755 Alzenau-Hörstein (DE); MUELLER, Wilfried, 61184 Karben (DE); KREUZER, Thomas, 61184 Karben (DE); CASAPU, Maria Cristina, 79761 Waldshut-Tiengen (DE); GRUNWALDT, Jan-Dierk, DK-2800 Kgs. Lyngby (DK); MACIEJEWSKI, Marek, CH-8049 Zürich (CH); BAIKER, Alfons, CH-8152 Opfikon (CH)
(74) Vertreter: Retzow, Stefan
(86) Internationale Anmeldenummer: PCT/EP2008/054583
(87) Internationale Veröffentlichungsnummer: WO 2008/141875

(56) Entgegenhaltungen:
- WO-A-2007/009679
- US-A1- 2006 252 638
- MARIA CASAPU ET AL: "Enhancement of Activity and Self-reactivation of NSR-catalysts by Temporary Formation of BaPtO3-perovskite" CATALYSIS LETTERS, KLUWER ACADEMIC PUBLISHERS-PLENUM PUBLISHERS, NE, Bd. 120, Nr. 1-2, 15. November 2007 (2007-11-15), Seiten 1-7, XP019570842 ISSN: 1572-879X

## Beschreibung

Die Erfindung betrifft ein zweistufiges Verfahren zur Reaktivierung thermisch gealterter Stickoxid-Speicherkatalysatoren, welche Stickoxide speichernde Verbindungen auf einem Ceroxid enthaltenden Trägermaterial und Platin als katalytisch aktives Edelmetall enthalten.

Stickoxid-Speicherkatalysatoren werden zur Entfernung der im mageren Abgas von so genannten Magermotoren enthaltenen Stickoxide verwendet. Dabei beruht die Reinigungswirkung darauf, daß in einer mageren Betriebsphase des Motors die Stickoxide vom Speichermaterial des Speicherkatalysators vorwiegend in Form von Nitraten gespeichert werden und in einer darauffolgenden fetten Betriebsphase des Motors die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Zu den Magermotoren gehören Benzin- und Dieselmotoren, die mit einem mageren Luft/Kraftstoff-Gemisch betrieben werden können. Die im Abgas dieser Motoren während der Magerphasen enthaltenen Stickoxide bestehen zu einem großen Teil aus Stickstoffmonoxid.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem Tragkörper, aufgebracht ist. Das Katalysatormaterial enthält ein Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle, insbesondere aber Strontiumoxid und Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Geeignete Trägermaterialien für die Speicherkomponenten sind temperaturstabile Metalloxide mit hoher Oberfläche von mehr als 10 m²/g, die eine hochdisperse Abscheidung der Speicherkomponenten ermöglichen. Die vorliegende Erfindung befaßt sich insbesondere mit Speichermaterialien, die Ceroxid-haltige Trägermaterialien aufweisen. Hierzu gehören dotierte Ceroxide und besonders Cer-Zirkon-Mischoxide, die ebenfalls dotiert sein können.

Als katalytisch aktive Komponenten werden die Edelmetalle der Platingruppe verwendet, die getrennt von den Speicherkomponenten auf einem separaten Trägermaterial vorliegen können. Als Trägermaterial für die Platingruppenmetalle wird meist aktives, hochoberflächiges Aluminiumoxid eingesetzt, das ebenfalls Dotierungskomponenten enthalten kann.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann. In der darauffolgenden fetten Betriebsphase des Motors werden die gebildeten Nitrate zu Stickoxiden zersetzt und mit Hilfe der katalytisch aktiven Komponenten und unter Verwendung von Kohlenmonoxid, Wasserstoff und Kohlenwasserstoffen als Reduktionsmittel zu Stickstoff unter Bildung von Wasser und Kohlendioxid reduziert.

Speicherkatalysatoren werden im Betrieb zeitweise sehr hohen Abgastemperaturen ausgesetzt, was zu einer thermischen Schädigung der Katalysatoren führen kann. Im Stand der Technik wurden bislang zwei Hauptalterungseffekte unterschieden:
- Die katalytisch aktiven Edelmetallkomponenten liegen im frisch hergestellten Speicherkatalysator in hochdisperser Form mit mittleren Partikelgrößen zwischen etwa 2 und 15 nm vor. Besonders im mageren Abgas wird mit steigender Abgastemperatur eine irreversible Vergrößerung der Edelmetallkristallite beobachtet. Diese Sinterung geht mit einer deutlichen Verminderung der katalytischen Aktivität einher.
- Die Speicherkomponenten unterliegen bei hohen Temperaturen ebenfalls einer Sinterung, wodurch sich ihre katalytisch aktive Oberfläche vermindert. Außerdem wurde beobachtet, daß die auf Trägermaterialien abgeschiedenen Speicherkomponenten bei hohen Temperaturen mit den Trägermaterialien Verbindungen eingehen, die eine geringere Speicherfähigkeit für Stickoxide aufweisen (siehe SAE Technical Paper 970746 und die EP 0982066 A1). Wird zum Beispiel Bariumoxid auf einem Ceroxid enthaltenden Trägermaterial als Speicherkomponente eingesetzt, so kann Bariumcerat (BaCeO₃) gebildet werden.

Die Sinterung der Edelmetallpartikel oder auch der Speicherkomponenten ist ein irreversiblen Prozeß. Eine Wiederherstellung der ursprünglichen Kristallitgrößen und somit der ursprünglichen katalytisch aktiven Oberflächen durch eine spezielle Behandlung scheint bislang nicht möglich zu sein.

Dagegen können Komponenten, die dem katalytischen Prozeß dadurch verloren gehen, daß sie mit anderen Katalysatorbestandteilen zu weniger aktiven Verbindungen reagieren, grundsätzlich zurückgewonnen werden, wenn die Reaktionsprodukte solcher Alterungsprozesse nicht flüchtig sind. Voraussetzung ist, daß die Reaktionsbedingungen bekannt sind, unter denen die in der Alterungsreaktion entstandenen Produkte wieder gezielt in die katalytisch aktiven Ausgangsverbindungen rücküberführt werden können.

Beispielsweise kann Bariumcerat BaCeO₃, das während der thermischen Alterung von Stickoxid-Speicherkatalysatoren, die Bariumoxid als Speicherkomponente in einem Ceroxid-basierten Stickoxid-Speichermaterial enthalten, durch Behandeln mit einer Stickstoffdioxid, Wasserdampf und gegebenenfalls Kohlendioxid enthaltenden Gasmischung bei 300°C bis 500°C wieder in Bariumoxid und Ceroxid zersetzt werden. WO 07/009679 der Anmelderin beschreibt ein Verfahren zur Reaktivierung von thermisch gealterten Stickoxid-Speicherkatalysatoren, dem dieser Prozeß zugrunde liegt.

Der Begriff der "Reaktivierung" ist dabei sorgfältig von dem im Zusammenhang mit Stickoxid-Speicherkatalysatoren ebenfalls gebräuchlichen Begriff der "Regeneration" zu unterscheiden.

Während der mageren Betriebsphase des Motors werden Stickoxide im Speichermaterial in Form von Nitraten gespeichert. Mit zunehmender Einlagerung nimmt die Speicherkapazität des Materials ab. Daher muß von Zeit zu Zeit eine *Regeneration* des Speichermaterials erfolgen. Hierzu wird der Motor für kurze Zeit mit fettem Luft/Kraftstoff-Gemischen betrieben. Aus dem Wechselspiel aus Stickoxid-Speicherung und Regeneration des Speichermaterial resultiert die für diesen Katalysatortyp charakteristische zyklische Betriebsweise aus Magerphase und Fettphase, wobei die Magerphase typischerweise 5 bis 50 mal so lang ist, wie die Fettphase.

Der Begriff der *Reaktivierung* des Katalysator bezeichnet ausschließlich die teilweise Wiederherstellung der katalytischen Aktivität, die zuvor in einem thermischen

Alterungsprozeß verloren gegangen ist. Der thermische Alterungsprozeß ist der zyklischen Betriebsweise, deren Bestandteil die Regeneration ist, immer überlagert, wenn der Katalysator hohen Betriebstemperaturen ausgesetzt ist. Die Reaktivierung ist nicht Bestandteil des Standard-Fahrbetriebes, sondern muß, sofern sie überhaupt im Fahrzeug stattfinden kann, als eigener Betriebszustand durch die Motorsteuerung des Fahrzeugs gezielt eingeleitet und geregelt werden. Eine Reaktivierung des Katalysators kann auch außerhalb des Fahrbetriebes beispielsweise während einer Wartung erfolgen. Dazu kann es erforderlich sein, den gealterten und zu reaktivierenden Katalysator aus dem Fahrzeug auszubauen und in einer vom Fahrzeug getrennten Einrichtung zu behandeln.

Ein solches Reaktivierungsverfahren beschreibt die WO 07/009679 der Anmelderin. Wie bereits erwähnt wird in dem hierin beschriebenen Verfahren die katalytische Aktivität eines thermisch gealterten Stickoxid-Speicherkatalysators, welcher basische Strontium- oder Bariumverbindungen auf einem Ceroxid enthaltenden Trägermaterial aufweist und darüber hinaus durch die thermische Alterung gebildete Strontium- und/oder Bariumverbindungen mit dem Trägermaterial - vor allem Strontiumcerat und/oder Bariumcerat - enthält, durch Behandeln mit einer Stickstoffdioxid, Wasserdampf und gegebenenfalls Kohlendioxid enthaltenden Gasmischung bei 300°C bis 500°C mindestens teilweise wieder hergestellt.

Unberücksichtigt bleiben in dem in der WO 07/009679 beschriebenen Verfahren die Alterungsmechanismen, denen die katalytisch aktiven Edelmetallkomponenten unterliegen, da bislang davon ausgegangen wurde, daß der Hauptalterungsmechanismus für Edelmetall die irreversible Sinterung der Partikel ist. Demzufolge kann das in der WO 07/009679 der Anmelderin nur eine Teilreaktivierung eines Ceroxid-basierten, thermisch gealterten Stickoxid-Speicherkatalysators leisten.

Der vorliegenden Erfindung lag nun die Aufgabe zugrunde, das bereits in der WO 07/009679 beschriebene Reaktivierungsverfahren dahingehend zu verbessern, daß auch die in thermischen Alterungsprozessen geschädigten katalytisch aktiven Komponenten wenigstens teilweise reaktiviert werden.

Die Lösung der Aufgabe setzt ein tieferes Verständnis der thermischen Alterungsprozesse im Hinblick auf die in den Stickoxid-Speicherkatalysatoren enthaltenen Edelmetalle voraus.

Es gibt Hinweise im neueren Stand der Technik, daß die Sinterung der Edelmetallpartikel möglicherweise nicht der einzige relevante Alterungsmechanismus für die Deaktivierung der katalytisch aktiven Komponenten in Ceroxid-basierten Stickoxid-Speicherkatalysatoren mit Erdalkalioxid als Stickoxid-Speicherkomponente sein könnte.

So beansprucht die US 2006/0252638 A1 einen Abgaskatalysator mit verbesserter thermischer Alterungsstabilität, der ein Selten-Erd-Element, ein Erdalkali-Element und ein Edelmetall enthält, wobei ein Teil des Selten-Erd-Elements und des Erdalkali-Elements ein Kompositoxid, und dieses Kompositoxid und ein Teil des Edelmetalls eine feste Lösung bilden. In der Beschreibung wird ausgeführt, worin die Erfinder die Ursache für die verbesserte Alterungsstabilität dieses Katalysators sehen, wenn als Selten-Erd-Element Cer, als Erdalkali-Element Barium und als Edelmetall Platin eingesetzt wird. Demnach beruht die verbesserte Alterungsstabilität des Katalysators im wesentlichen auf der Reversibilität der Bildung einer festen Lösung aus Platin, Barium- und Ceroxid der Formel (Ba, Pt)CeO₃ oder Ba(Ce, Pt)O₃. Unter leicht mageren Abgasbedingungen ist Pt demzufolge Bestandteil der festen Lösung. Beim Übergang zur leicht fetten Atmosphäre wird es zum Teil aus dem Verbund wieder hinausgelöst und separat auf dem Mischoxid abgeschieden. Bei einem schnellen Wechsel zwischen leicht fetten und leicht mageren Bedingungen, wie er beim Betrieb von Dreiwegekatalysatoren üblich ist, bleibt Platin der genannten Schrift zufolge so in aktiver Form zugänglich.

Zur Lösung der hier gestellten Aufgabe war also zunächst die Frage zu klären, ob es auch in Ceroxid-basierten Stickoxid-Speicherkatalysatoren mit Strontium oder Barium als Stickoxid-Speicherkomponente zur Bildung ternärer Oxide unter Einschluß von Edelmetall kommt, unter welchen Bedingungen dies gegebenenfalls geschieht und welchen Einfluß dies auf die Stickoxid-Speicheraktivität hat.

Untersuchungen der Erfinder haben gezeigt, daß in einem ersten Schritt bei hohen Temperaturen in Sauerstoff-haltiger Atmosphäre zunächst Platinoxid PtO₂ gebildet wird. Dieses weist eine gewisse thermische Mobilität im Katalysator auf und reagiert mit der Stickoxid-Speicherkomponente Bariumcarbonat bei 650 bis 700°C nach Reaktionsgleichung (1) zu Bariumplatinat:

PtO₂ + BaCO₃ → BaPtO₃ + CO₂ (1)

Liegt die Stickoxid-Speicherkomponente in geträgerter Form auf einem Ceroxid enthaltenden Trägermaterial vor, so entsteht bei hinreichend hohen Temperaturen in einer Parallelreaktion (2) Bariumcerat.

BaCO₃ + CeO₂ → BaCeO₃ + CO₂ (2)

In einer Folgereaktion (3), die bereits bei Temperaturen ab 770°C eintritt, entsteht aus Bariumcerat und Bariumplatinat ein ternäres Mischoxid:

BaPtO₃ + BaCeO₃ → Ba₂CePtO₆ (3)

Die aus diesem Prozeß resultierenden Verbindungen zeigen keine hinreichende katalytische Aktivität.

Aufgabe der vorliegenden Erfindung war es, wie bereits erwähnt, ein Verfahren zur Verfügung zu stellen, mit dem die ursprüngliche katalytische Aktivität eines derart geschädigten Katalysators unter Rückführung des Bariums und des Platins in einen katalytisch aktiven Zustand möglichst weitgehend wieder hergestellt werden kann.

Diese Aufgabe wird durch ein zweistufiges Verfahren zur Reaktivierung eines thermisch gealterten Stickoxid-Speicherkatalysators gelöst, wobei der Speicherkatalysator neben Platin als katalytisch aktiver Komponente basische Strontium- oder Bariumverbindungen oder Strontium- und Bariumverbindungen auf einem Ceroxid enthaltenden Trägermaterial aufweist und darüber hinaus durch thermische Alterung gebildete Strontium- und/oder Bariumverbindungen mit dem Trägermaterial unter Einschluß von Platin enthält. Das Verfahren ist dadurch gekennzeichnet, daß der Katalysator in einem ersten Verfahrensschritt in einer Reduktionsmittel enthaltenden Gasmischung auf eine Temperatur zwischen 100°C und 500°C aufgeheizt wird und dann in einem zeitlich versetzten, zweiten Verfahrensschritt mit einer Stickstoffdioxid und Wasserdampf enthaltenden Gasmischung bei Temperaturen zwischen 300°C und 500°C behandelt wird.

Durch diese Behandlung erfolgt im ersten Verfahrensschritt die Zersetzung des Barium-Cer-Platinats unter Freisetzung von katalytisch aktivem Platin und unter Bildung von Bariumoxid und Bariumcerat gemäß Reaktionsgleichung (4):

Ba₂CePtO₆ + [Red] → Pt + BaO + BaCeO₃ + [Red-O₂] (4)

*[Red] = Reduktionsmittel; [Red-O₂] = Reaktionsprodukt aus Reduktionsmittel + 2 O²⁻Bspl.: [Red] = Wasserstoff = 2 H₂* → *[Red-O₂] = 2 H₂O*

In der zweiten Reaktionsstufe erfolgt die Zersetzung des Bariumcerats in völliger Analogie zu dem in WO 07/009679 beschriebenen Verfahren.

Um Platin im ersten Verfahrensschritt in feinverteilter, katalytisch aktiver Form aus dem während der thermischen Alterung gebildeten ternären, Barium, Cer und Platin enthaltenden Oxid freisetzen zu können, muß der gealterte Katalysator mit einer Gasmischung behandelt werden, die ein geeignetes Reduktionsmittel in ausreichender Konzentration enthält. Um im zweiten Verfahrensschritt Barium in eine Stickoxidspeichernde Verbindung zurückzuüberführen, muß der Katalysator mit einer Gasmischung behandelt werden, die mindestens Stickstoffdioxid und Wasserdampf in geeigneten Konzentrationen enthält. Die Art der zur Reaktivierung benötigten Gase bestimmt die Zweistufigkeit des Verfahrens: Bei gleichzeitiger Anwesenheit eines Reduktionsmittels und des als Oxidationsmittel wirkenden Stickstoffdioxids in einer Gasmischung würde die Umsetzung der für die Reaktivierung zwingend benötigten Reaktanden miteinander bevorzugt. Für die erheblich langsamer verlaufende Reaktivierung des Katalyators bliebe nicht ausreichend Reduktionsmittel bzw. Stickstoffdioxid übrig. Daraus ergibt sich, daß der erste und der zweite Verfahrensschritt nacheinander, d.h. zeitlich versetzt ablaufen müssen.

Die im ersten Verfahrensschritt verwendete Gasmischung enthält bevorzugt Wasserstoff oder Kohlenmonoxid oder Ammoniak oder Kohlenwasserstoffe oder Mischungen davon als Reduktionsmittel. Besonders bevorzugt sind Wasserstoff oder Kohlenmonoxid oder Mischungen davon. Die Konzentrationen des Reduktionsmittels müssen so gewählt sein, daß die im ersten Verfahrensschritt verwendete Gasmischung im Mittel reduzierend wirkt, also anteilig mehr Reduktionsmittel enthält als oxidierende Komponenten wie beispielsweise Sauerstoff. Ein gegebenenfalls im ersten Verfahrensschritt eingesetztes Abgas muß also fett sein, d.h. eine Luftzahl λ < 1 aufweisen. Zur Verwendung im ersten Verfahrensschritt besonders gut geeignet sind Gasmischungen, die frei von Sauerstoff sind.

Die Art des im ersten Verfahrensschritt eingesetzten Reduktionsmittels bestimmt auch die optimale Temperatur, die bei der ersten Teilreaktivierung des thermisch gealterten Katalysators zur Wiederfreisetzung des Platins gewählt werden sollte.

Bevorzugt wird im ersten Verfahrensschritt eine Gasmischung verwendet, die Wasserstoff in einer Konzentration von 0,5 bis 15 Vol.-% enthält, wobei der Katalysator auf eine Temperatur zwischen 150°C und 400°C aufgeheizt wird. Besonders bevorzugt enthält die Gasmischung 3 bis 15 Vol.-% Wasserstoff, ganz besonders bevorzugt 5 bis 10 Vol.-% Wasserstoff. Die Rückgewinnung des Platins in feinverteilter, katalytisch aktiver Form beginnt in Wasserstoff-haltiger Atmosphäre schon bei relativ niedrigen Temperaturen, und verläuft bei höheren Temperaturen dann mit zunehmender Geschwindigkeit. Besonders bevorzugt wird der Katalysator in der Wasserstoff-haltigen Atmosphäre auf 150 °C bis 350°C, ganz besonders bevorzugt auf 200°C bis 300°C erwärmt.

Wird im ersten Verfahrensschritt eine Gasmischung verwendet, die Kohlenwasserstoffe als Reduktionsmittel enthält, so werden Temperaturen von wenigstens 300°C benötigt. Bevorzugt wird der Katalysator in einer 0,1 bis 15 Vol.-% Kohlenwasserstoffe enthaltenden Gasmischung im ersten Verfahrensschritt auf eine Temperatur zwischen 300°C und 500°C aufgeheizt. Besonders bevorzugt enthält die Gasmischung 1 bis 10 Vol.-% Kohlenwasserstoffe. Ist diese Gasmischung frei von Sauerstoff, so erfolgt ab 300°C das Aufspalten der eingesetzten Kohlenwasserstoffe unter Bildung von Wasserstoff. Bei Restsauerstoffgehalten kommt es bereits bei etwas geringeren Temperaturen zur partiellen Oxidation der Kohlenwasserstoffe unter Bildung von Kohlenmonoxid. Bei gleichzeitiger Anwesenheit von Wasserdampf kommt es ebenfalls zur Bildung von Wasserstoff als Folge einer Wassergas-Shift-Reaktion, in der Kohlenmonoxid und Wasserdampf zu Kohlendioxid und Wasserstoff umgesetzt werden. Die aus diesen Prozessen entstehenden Komponenten Kohlenmonoxid und Wasserstoff stellen die eigentlichen Reduktionsmittel dar, die Platin aus dem während der Alterung entstandenen Barium-Cer-Platinat "zurückholen".

In einer weiteren bevorzugten Ausführungsform wird im ersten Verfahrensschritt eine Gasmischung verwendet, die 0,5 bis 15 Vol.-% Kohlenmonoxid enthält, wobei der Katalysator auf 150°C bis 400°C aufgeheizt wird. Vorteilhaft sind vor allem Gasmischungen mit mehr als 5 Vol.-% Kohlenmonoxid, besonders bevorzugt solche mit 8 bis 12 Vol.-% Kohlenmonoxid. Enthält die Gasmischung außerdem 0,5 bis 15 Vol.-% Wasserdampf, bevorzugt 5 bis 10 Vol.-% Wasserdampf, so tritt ab Temperaturen von 200°C wiederum eine schnelle Wassergas-Shift-Reaktion ein, in dessen Folge der als Reduktionsmittel gegenüber dem Barium-Cer-Platinat hocheffektive Wasserstoff entsteht. Beim Einsatz einer solchen Gasmischung führen Temperaturen im Bereich 200°C bis 400°C in der ersten Verfahrensstufe zu einem hervorragenden Reaktivierungsergebnis.

Für den Fall, daß der zu reaktivierende Stickoxid-Speicherkatalysator Bestandteil einer Abgasreinigungsanlage an einem Fahrzeug mit Magermotor ist, kann die Verwendung einer Ammoniak als Reduktionsmittel enthaltenden Gasmischung im ersten Verfahrensschritt besonders vorteilhaft sein. Dies gilt insbesondere dann, wenn die Abgasreinigungsanlage außer dem Stickoxid-Speicherkatalysator einen Katalysator zur selektiven katalytischen Reduktion und eine Einrichtung zur Dosierung von Ammoniak oder einer zu Ammoniak zersetzlichen Verbindung in den Abgasstrang enthält. Ammoniak kann dann über eine vor dem Stickoxid-Speicherkatalysator angeordnete Dosierstelle im ersten Verfahrensschritt zusätzlich in den Abgasstrang eingebracht und zur Reduktion des Platins in Ba₂CePtO₆ benutzt werden.

Nach der Behandlung des thermisch gealterten Stickoxid-Speicherkatalysators mit einer Reduktionsmittel enthaltenden Gasmischung in der ersten Verfahrensstufe liegt Platin in katalytisch aktiver Form neben BaO-Anteilen (bzw. Anteilen von Stickoxidspeichernden BaO-Folgeprodukten wie BaCO₃ oder Ba(OH)₂) und größeren Mengen Bariumcerat vor. Da Bariumcerat nicht in der Lage ist, effektiv Stickoxide einzuspeichern, muß sich an die erste Verfahrensstufe eine zweite anschließen, während der das Bariumcerat zu Bariumoxid und Ceroxid zersetzt wird. Diese zweite Verfahrensstufe folgt im wesentlichen dem in der WO 2007/009679 der Anmelderin beschriebenen Verfahren, auf dessen Beschreibung hiermit Bezug genommen wird.

Im zweiten Verfahrensschritt wird der Katalysator mit einer Stickstoffdioxid und Wasserdampf enthaltenden Gasmischung bei Temperaturen zwischen 300°C und 500°C behandelt. Bevorzugt enthält die Gasmischung 0,05 bis 35 Vol.-% Stickoxide neben 5 bis 50 Vol.-% Sauerstoff und 5 bis 30 Vol.-% Wasserdampf. Eine besonders schnelle und vollständige Zersetzung des Bariumcerats wird erreicht, wenn die in der zweiten Verfahrensstufe eingesetzte Gasmischung außerdem 5 bis 20 Vol.-% Kohlendioxid enthält.

Das erfindungsgemäße Verfahren eignet sich zur Reaktivierung thermisch gealterter Stickoxid-Speicherkatalysatoren, die Bestandteil einer Abgasreinigungsanlage an einem Fahrzeug mit Magermotor sind.

Je nach Ausgestaltung der Erfindung kann es vorteilhaft sein, den Katalysator zur Durchführung der Reaktivierung aus dem Fahrzeug auszubauen. Dabei kann das gesamte zweistufige Reaktivierungsverfahren außerhalb des Fahrzeugs in einer dafür geeigneten Apparatur erfolgen. Ebenso ist es denkbar, daß nur die erste Verfahrensstufe außerhalb des Fahrzeugs durchgeführt wird, während die zweite Verfahrensstufe "on board" unter Verwendung des vom Magermotor in bestimmten Betriebspunkten erzeugten Abgases erfolgt.

Wird der Katalysator zur Durchführung der Reaktivierung beispielsweise während einer routinemäßigen Wartung aus dem Fahrzeug ausgebaut, so kann die Reaktivierung beispielsweise in einem temperierten Ofen erfolgen, der von einer geeigneten Gasmischung durchströmt wird. Die benötigten Gasmischungen können vorgemischt in Gasdruckbehältern zur Verfügung gestellt werden. Ebenso können die benötigten Gasmischungen aus ihren Bestandteilen, die in verschiedenen Gasdruckbehältern gegebenenfalls ergänzt durch einen Wasserbehälter mit Verdampfer vorgelegt werden, in einer dem Ofen vorgeschalteten, temperierten Gasmischstrecke mit optimaler Zusammensetzung hergestellt werden. Der Vorteil einer solchen Ausführungsform liegt darin, daß sowohl die Zusammensetzung der zur Reaktivierung verwendeten Gasmischungen als auch die Reaktivierungszeiten optimal eingestellt werden können. So ist es besonders vorteilhaft, wenn die im ersten Verfahrensschritt verwendete Gasmischung Sauerstoff-frei ist. Ist der Stickoxid-Speicherkatalysator Bestandteil einer Abgaseinigungsanlage an einem Fahrzeug mit Magermotor, so kann eine solche Sauerstoff-freie Gasmischung nicht durch Motorenabgas bereit gestellt werden, da das durch den Motor erzeugbare Abgas in allen üblichen Betriebspunkten nennenswerte Restsauerstoff gehalte aufweist. Die Durchführung einer (Teil-)Reaktivierung außerhalb des Fahrzeugs bietet sich also an.

Bevorzugt dauert die Behandlung des thermisch gealterten Stickoxid-Speicherkatalysators bei der Durchführung der Reaktivierung außerhalb des Fahrzeugs im ersten Verfahrensschritt 0,2 bis 12 Stunden, im zweiten Verfahrensschritt 0,1 bis 5 Stunden.

Ist der zu reaktivierende, thermisch gealterte Stickoxid-Speicherkatalysator Bestandteil einer Abgasreinigungsanlage an einem Fahrzeug mit Magermotor und Abgasrückführung, so kann das Reaktivierungsverfahren auch "on board" am Fahrzeug durchgeführt werden, wobei die zur Reaktivierung benötigten Gasmischungen durch das Abgas des Verbrennungsmotors gebildet werden. Die in der ersten Verfahrensstufe verwendete Gasmischung ist dann Abgas des Magermotors mit einer Luftzahl λ < 1, die in der zweiten Verfahrensstufe verwendete Gasmischung Abgas des Magermotors mit einem Stickstoffdioxid-Gehalt von 0,02 bis 2 Vol.-%.

Zur Erzeugung eines so hohen Stickstoffdioxid-Gehalts im Abgas des Magermotors sind definierte Betriebspunkte zu wählen und die dem Fachmann bekannten, üblichen ergänzenden Maßnahmen zur Erhöhung der Stickoxid-Konzentration im Abgas vorzunehmen, wie beispielsweise die Abschaltung der Abgasrückführung und die Veränderung des Zündzeitpunktes. Außerdem ist es vorteilhaft, wenn die Abgasanlage anströmseitig zum Stickoxid-Speicherkatalysator mindestens einen weiteren Katalysator mit nennenswerter Oxidationskraft enthält, beispielsweise einen Dreiwegekatalysator oder einen Dieseloxidationskatalysator oder einen weiteren Stickoxid-Speicherkatalysator. Dieser dient dazu, im mageren Abgas NO₂ aus in der Rohemission im Überschuß enthaltenem NO und Sauerstoff herzustellen. Außerdem dient ein solcher Katalysator dazu, Kohlenmonoxid aus der Rohemission zu Kohlendioxid zu oxidieren. Wie in der WO 2007/009679 beschrieben, kann die Zersetzung des Bariumcerats, die im zweiten Verfahrensschritt erfolgen soll, auch durch Behandeln mit einer Kohlendioxid enthaltenden Gasmischung bei Temperaturen oberhalb von 400°C erfolgen. Daher ist die Verwendung eines Abgases mit einem Kohlendioxid-Gehalt von 5 bis 20 Vol.-% im zweiten Verfahrensschritt ganz besonders bevorzugt.

Besonders bevorzugt sind Ausführungsformen des erfindungsgemäßen Verfahrens, bei denen der Stickoxid-Speicherkatalysator nur zur Durchführung des ersten Verfahrensschritts aus dem Fahrzeug ausgebaut und in einer dafür geeigneten Anlage über einen Zeitraum von 0,5 bis 5 Stunden mit einer Wasserstoff enthaltenden Gasmischung bei 150°C bis 400°C, bevorzugt 200°C bis 350°C, behandelt wird, während der zweite Verfahrensschritt nach Wiedereinbau des teilregenerierten Katalysators im Fahrbetrieb eines Fahrzeugs mit Magermotor und Abgasrückführung erfolgt.

Die Erfindung wird im folgenden an Hand einiger Beispiele und Figuren näher erläutert. Es zeigen:

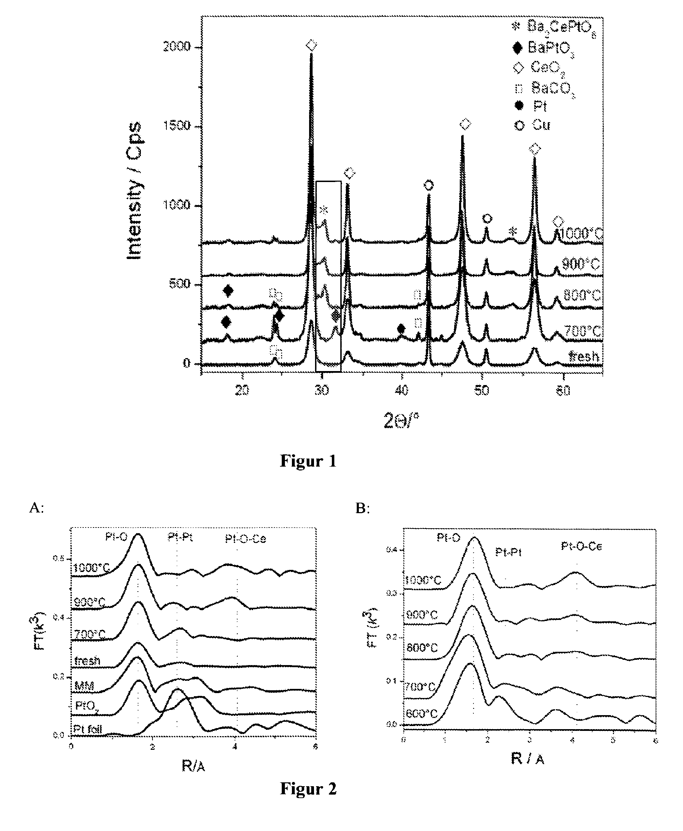

- **Figur 1:**: Röntgenpulverdiffraktogramme eines 7,7 Gew.-% Platin und 15,4 Gew.-% BaO auf CeO₂ enthaltenden Pulverkatalysators (VK1 aus Vergleichsbeispiel 1) im frisch hergestellten Zustand und nach thermischer Alterung an Luft bei 700°C, 800°C, 900°C und 1000°C über die Dauer von 12 Stunden.
- **Figur 2:**: Fourier-transformierte EXAFS-Spektren an der Pt L3-Kante von frisch hergestellten und thermisch gealterten Katalysatorpulvern; Teil A (links) zeigt die EXAFS-Spektren des Pulverkatalysators enthaltend 7,7 Gew.-% Platin und 15,4 Gew.-% BaO auf CeO₂ (VK-1), sowie Vergleichsspektren von PtO₂ und Platinfolie; Teil B (rechts) zeigt die EXAFS-Spektren des Platin-armen Vergleichskatalysators VK-2, enthaltend 0,8 Gew.-% Pt und 16,5 Gew.-% BaO auf CeO₂.

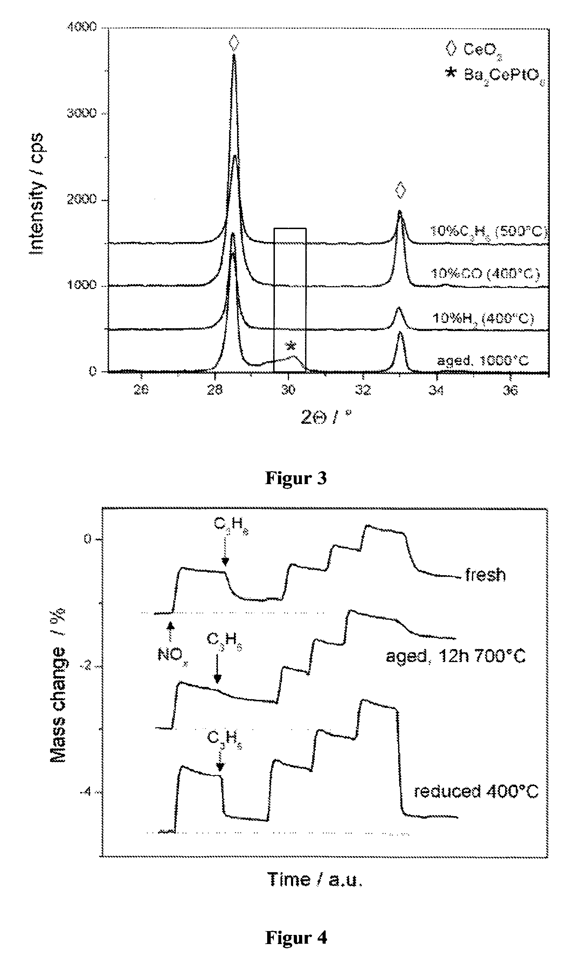

- **Figur 3:**: Pulverdiffraktogramme des bei 1000°C für 12 Stunden an Luft getemperten Pulverkatalysators VK-1 enthaltend 7,7 Gew.-% Platin und 15,4 Gew.-% BaO auf CeO₂ im gealterten Zustand und nach Behandlung mit a) 10 Vol.- % Wasserstoff in Helium bei 400°C, b) 10 Vol.-% Kohlenmonoxid in Helium bei 400°C und c) 10 Vol.-% Propen in Helium bei 500°C
- **Figur 4:**: Ergebnisse eines Puls-Thermogravimetrie-Experiments an einer Probe des bei 700°C für 12 Stunden getemperten Platin-armen Katalysatorpulvers aus Vergleichsbeispiel 2, VK-2, im Vergleich zum frisch hergestellten Pulver und zu einer entsprechenden, bei 400°C mit Wasserstoffpulsen reaktivierten Probe.

### Vergleichsbeispiel 1:

In diesem Vergleichsbeispiel wurden zunächst die Alterungseffekte in einem Platin-reichen Stickoxid-Speicherkatalysator untersucht.

Zur Herstellung des Katalysators wurden 100 g kommerziell erhältliches Ceroxid mit einer BET-Oberfläche von ca. 100 m²/g nach der "incipient-wetness"-Methode mit Bariumacetat-Lösung imprägniert, bis die aufgenommene Lösungsmenge einem Gehalt von 20 g BaO nach Kalzination entsprach. Zwischen jedem Imprägnierungsschritt wurde das Pulver bei 80°C getrocknet. Nach der letzten Imprägnierung erfolgte eine fünfstündige Kalzination bei 500°C. Auf das so erhaltene BaO/CeO₂-Pulver wurde Platin durch Imprägnierung mit [Pt(NH₃)₂(NO₂)₂]-Lösung, Trocknung bei 80°C und erneute Kalzination bei 500°C für die Dauer von 5 Stunden aufgebracht.

Das fertige Katalysatorpulver enthielt 7,7 Gew.-% Platin und 15,4 Gew.-% BaO.

Zur Untersuchung des Alterungsmechanismus in Sauerstoff-haltiger Atmosphäre wurden Proben des so erhaltenen Pulverkatalysators VK-1 für jeweils 12 Stunden an Luft getempert, wobei Temperaturen von 700°C, 800°C, 900°C und 1000°C gewählt wurden. Die thermisch gealterten Pulver wurden mit Hilfe der Röntgenpulverdiffraktometrie im Vergleich zum frisch hergestellten Katalysatorpulver untersucht. Die entsprechenden Diffraktogramme sind in Figur 1 dargestellt.

Im Frischzustand sind im Diffraktogramm neben den Cu-Standard-Reflexen nur die für CeO₂ und Bariumcarbonat typischen Reflexe zu erkennen. Das Platin liegt in röntgenamorphem Zustand, d.h. feinverteilt vor.

Nach Temperung bei 700°C ist neben einer Sinterung des Platins bis in den kristallinen Zustand (→ Pt-Reflex bei 2Θ = 40°) die Bildung von Bariumplatinat erkennbar. Die Kalzination bei höheren Temperaturen führt zum Fortschreiten der Alterungsreaktion unter Bildung von Ba₂CePtO₆, wobei das in der ersten Zwischenstufe entstandene Bariumplatinat wieder verschwindet. Das Verschwinden des Pt-Reflexes bei 2Θ = 40° zeigt, daß Platin vollständig mit den oxidischen Materialien reagiert.

### Vergleichsbeispiel 2:

Zum Beweis, daß die Alterungsprozesse, die in dem Platin-reichen Pulverkatalysator VK-1 beobachtet wurden, auch bei niedrigeren Platinkonzentrationen stattfinden, wurde nach dem im Vergleichsbeispiel 1 beschriebenen Verfahren ein Katalysator hergestellt, der sich von dem in Vergleichsbeispiel 1 hergestellten Katalysatorpulver nur in der Platinkonzentration unterschied: Auf 100 g CeO₂ wurden 20 g BaO und 1 g Pt aufgebracht, so daß das fertige Katalysatorpulver 0,8 Gew.-% Pt und 16,5 Gew.-% BaO enthielt.

Proben des so erhaltenen Katalysatorpulvers VK-2 wurden für jeweils 12 Stunden an Luft getempert, wobei Temperaturen von 600°C, 700°C, 800°C, 900°C und 1000°C gewählt wurden. Die thermisch gealterten Pulver wurden im Vergleich zu entsprechenden Proben von VK-1 in einem EXAFS-Experiment (EXAFS = extended x-ray absorption fine structure; Röntgenabsorptionsspektroskopie) untersucht. Figur 2 zeigt die Ergebnisse der Messungen als Fourier-transformierte EXAFS-Spektren. Teil A (links) zeigt die EXAFS-Spektren der VK-1-Proben, sowie Vergleichsspektren des Frischmaterials, von PtO₂ und Platinfolie. Teil B (rechts) zeigt die EXAFS-Spektren des Platin-armen Vergleichskatalysators VK-2.

Die Signale bei 3.6 Ångström und 4.2 Ångström, die ab 800°C in beiden Proben beobachtet werden, sind charakteristisch für die benachbarten Barium- und Ceratome im Perowskit-Gitter des Ba₂CePtO₆.

### Beispiel 1:

Eine Probe des in Vergleichsbeispiel 1 hergestellten Platin-reichen Pulverkatalysators VK-1 wurde für 12 Stunden bei 1000°C getempert. Proben des so hergestellten thermisch gealterten Katalysatorpulvers, das den Untersuchungen aus Vergleichsbeispiel 1 zufolge Ba₂CePtO₆ enthielt, wurden unterschiedlichen reduktiven Behandlungen unterzogen:
a.) Behandlung mit einer 10 Vol.-% Wasserstoff in Helium enthaltenden Gasmischung bei 400°C;
b.) Behandlung mit einer 10 Vol.-% Kohlenmonoxid in Helium enthaltenden Gasmischung bei 400°C;
c.) Behandlung mit einer 10 Vol.-% Propen C₃H₆ enthaltenden Gasmischung bei 500°C.

Nach der Behandlung wurden die Proben mit Hilfe der Röntgenpulverdiffraktometrie untersucht. Figur 3 zeigt Ausschnitte aus den Pulverdiffraktogrammen für den Bereich 2Θ = 25 - 37°, in dem der für Ba₂CePtO₆ charakteristische Reflex bei 2Θ = 30,2° liegt. Es ist deutlich zu sehen, daß der für Ba₂CePtO₆ charakteristische Reflex nach den reduktiven Behandlungen vollständig verschwunden ist. Die nicht dargestellten Übersichtsdiffraktogramme zeigen darüber hinaus eine Zunahme der für Bariumcerat charakteristischen Reflexintensitäten, sowie das erneute Auftreten von Bariumcarbonat-Reflexen.

### Beispiel 2:

Zur Untersuchung des Einflusses der Produkte der Alterungsreaktionen wurden Puls-Thermoanalyse-Untersuchungen durchgeführt. [Zu Versuchsaufbau und Methode vgl. M.Maciejewski, C.A. Muller, R. Tschan, W.D. Emmerich, A. Baiker, Thermochim. Acta 295 (1997) 167].

Eine Probe des bei 700°C für 12 Stunden getemperten Platin-armen Katalysatorpulvers aus Vergleichsbeispiel 2, VK-2, wurde im Vergleich zum frisch hergestellten Pulver und zu einer entsprechenden, bei 400°C mit Wasserstoffpulsen reaktivierten Probe untersucht.

Die Proben wurden zu Beginn eines jeden Experiments unter Helium bei 500°C ausgeheizt. Dann wurden zur Simulation der Magerphase alternierende Pulse aus NO und Sauerstoff ins Trägergas injektiert. Anschließend wurde die Regenerationsphase durch Propen-Pulse nachgestellt. Die während der Experimente aufgenommenen Thermogravimetrie-Kurven sind in Figur 4 dargestellt.

Die beobachteten Massenänderungen während der Speicherphase sind das Ergebnis von zwei sich überlagernden Effekten: Der Bariumnitrat-Bildung und der Bariumcarbonat-Zersetzung. Die Ergebnisse zeigen, daß alle drei Proben unter den gewählten Reaktionsbedingungen vergleichbare Stickoxid-Speicherkapazitäten haben. Dabei wird das Einspeicherverhalten maßgeblich von den mit 10.000 ppm sehr hoch gewählten Stickoxid-Konzentrationen bestimmt.

Die Haupteinschränkung der Reaktivität des gealterten Materials resultiert aus dem Verlust der Regenerationsaktivität. Während der NOₓ-Regeneration wird Platin zwingend benötigt, um das "Ausräumen" des Stickoxid-Speichers durch die anschließende Umsetzung des NOₓ mit dem Reduktionsmittel Propen in Gang zu halten. Da das Edelmetall infolge der thermischen Alterungsprozesse nicht mehr in katalytisch aktivem Zustand vorliegt, ist dieser Prozeß im gealterten Katalysator gehemmt, eine Stickoxid-Regeneration findet praktisch nicht statt.

Der mit Wasserstoff reaktivierte Katalysator zeigt eine Stickoxid-Speicher- und -Regenerationsaktivität, die dem frisch hergestellten Katalysator nahezu vollständig entspricht.

## Patentansprüche

1. Verfahren zur Reaktivierung eines thermisch gealterten Stickoxid-Speicherkatalysators, welcher neben Platin als katalytisch aktiver Komponente basische Strontium- oder Bariumverbindungen oder Strontium- und Bariumverbindungen auf einem Ceroxid enthaltenden Trägermaterial aufweist und darüber hinaus durch thermische Alterung gebildete Strontium- und/oder Bariumverbindungen mit dem Trägermaterial unter Einschluß von Platin enthält, und der zur Reinigung von Abgasen eines Kraftfahrzeuges mit Magermotor verwendet wird,
**dadurch gekennzeichnet,**
**daß** der Katalysator in einem ersten Verfahrensschritt in einer Reduktionsmittel enthaltenden Gasmischung auf eine Temperatur zwischen 100°C und 500°C aufgeheizt wird und dann in einem zeitlich versetzten, zweiten Verfahrensschritt mit einer Stickstoffdioxid und Wasserdampf enthaltenden Gasmischung bei Temperaturen zwischen 300°C und 500°C behandelt wird.

2. Verfahren nach Anspruch 1,
**dadurch gekennzeichnet,**
**daß** die im ersten Verfahrensschritt verwendete Gasmischung als Reduktionsmittel Wasserstoff oder Kohlenmonoxid oder Ammoniak oder Kohlenwasserstoffe oder Mischungen davon enthält.

3. Verfahren nach Anspruch 2,
**dadurch gekennzeichnet,**
**daß** die im ersten Verfahrensschritt verwendete Gasmischung 0,5 bis 15 Vol.-% Wasserstoff enthält und der Katalysator auf eine Temperatur zwischen 150°C und 400°C aufgeheizt wird.

4. Verfahren nach Anspruch 2,
**dadurch gekennzeichnet,**
**daß** die im ersten Verfahrensschritt verwendete Gasmischung 0,1 bis 15 Vol.-% Kohlenwasserstoffe enthält und der Katalysator auf eine Temperatur zwischen 300°C und 500°C aufgeheizt wird.

5. Verfahren nach Anspruch 2,
**dadurch gekennzeichnet,**
**daß** die im ersten Verfahrensschritt verwendete Gasmischung 0,5 bis 15 Vol.-% Kohlenmonoxid enthält und der Katalysator auf eine Temperatur zwischen 150°C und 400°C aufgeheizt wird.

6. Verfahren nach Anspruch 5,
**dadurch gekennzeichnet,**
**daß** die im ersten Verfahrensschritt verwendete Gasmischung außerdem 0,5 bis 15 Vol.-% Wasserdampf enthält.

7. Verfahren nach Anspruch 1,
**dadurch gekennzeichnet,**
**daß** die im zweiten Verfahrensschritt verwendete Gasmischung 0,05 bis 35 Vol.- % Stickoxide, 5 bis 50 Vol.-% Sauerstoff und 5 bis 30 Vol.-% Wasserdampf enthält.

8. Verfahren nach Anspruch 7,
**dadurch gekennzeichnet,**
**daß** die im zweiten Verfahrensschritt verwendete Gasmischung außerdem 5 bis 20 Vol.-% Kohlendioxid enthält.

9. Verfahren nach Anspruch 1,
**dadurch gekennzeichnet,**
**daß** der Stickoxid-Speicherkatalysator Bestandteil einer Abgasreinigungsanlage an einem Fahrzeug mit Magermotor ist und der Katalysator zur Durchführung der Reaktivierung aus dem Fahrzeug ausgebaut wird.

10. Verfahren nach Anspruch 9,
**dadurch gekennzeichnet,**
**daß** die im ersten Verfahrensschritt verwendete Gasmischung Sauerstoff-frei ist.

11. Verfahren nach Anspruch 10,
**dadurch gekennzeichnet,**
**daß** die Behandlung des Katalysators im ersten Verfahrensschritt 0,2 bis 12 Stunden, die Behandlung des Katalysators im zweiten Verfahrensschritt 0,1 bis 5 Stunden dauert.

12. Verfahren nach Anspruch 1,
**dadurch gekennzeichnet,**
**daß** der Stickoxid-Speicherkatalysator Bestandteil einer Abgasreinigungsanlage an einem Fahrzeug mit Magermotor und Abgasrückführung ist und die zur Reaktivierung benötigten Gasmischungen durch das Abgas des Verbrennungsmotors gebildet werden.

13. Verfahren nach Anspruch 12,
**dadurch gekennzeichnet,**
**daß** die im ersten Verfahrensschritt verwendete Gasmischung Abgas das Magermotors mit einer Luftzahl λ < 1 ist.

14. Verfahren nach Anspruch 13,
**dadurch gekennzeichnet,**
**daß** die im zweiten Verfahrensschritt verwendete Gasmischung Abgas des Magermotors mit einem Stickstoffdioxid-Gehalt von 0,02 bis 2 Vol.-% ist.

15. Verfahren nach Anspruch 14
**dadurch gekennzeichnet,**
**daß** die im zweiten Verfahrensschritt verwendete Gasmischung Abgas des Magermotors mit einem Kohlendioxid-Gehalt von 5 bis 20 Vol.-% ist.

16. Verfahren nach Anspruch 2
**dadurch gekennzeichnet,**
**daß** der Stickoxidspeicherkatalysator Bestandteil einer Abgasreinigungsanlage an einem Fahrzeug mit Magermotor ist und die zur Reaktivierung benötigten Gasmischungen durch das Abgas des Verbrennungsmotors und zusätzlich in den Abgasstrang eingebrachte Komponenten gebildet werden.

17. Verfahren nach Anspruch 16,
**dadurch gekennzeichnet,**
**daß** im ersten Verfahrensschritt zusätzlich Ammoniak in den Abgasstrang eingebracht wird.

## Claims

1. Process for reactivating a thermally aged nitrogen oxide storage catalyst which comprises, in addition to platinum as a catalytically active component, basic strontium or barium compounds or strontium and barium compounds on a support material comprising cerium oxide, and additionally comprises strontium and/or barium compounds formed by thermal aging with the support material with inclusion of platinum, and which is used for emission control in a motor vehicle with a lean-burn engine,
**characterized in that**
the catalyst, in a first process step, is heated in a reducing agent-containing gas mixture to a temperature between 100°C and 500°C, and then, in a second process step offset in time, treated with a nitrogen dioxide- and water vapor-containing gas mixture at temperatures between 300°C and 500°C.

2. Process according to Claim 1,
**characterized in that**
the gas mixture used in the first process step comprises, as the reducing agent, hydrogen or carbon monoxide or ammonia or hydrocarbons or mixtures thereof.

3. Process according to Claim 2,
**characterized in that**
the gas mixture used in the first process step comprises 0.5 to 15% by volume of hydrogen, and the catalyst is heated to a temperature between 150°C and 400°C.

4. Process according to Claim 2,
**characterized in that**
the gas mixture used in the first process step comprises 0.1 to 15% by volume of hydrocarbons, and the catalyst is heated to a temperature between 300°C and 500°C.

5. Process according to Claim 2,
**characterized in that**
the gas mixture used in the first process step comprises 0.5 to 15% by volume of carbon monoxide, and the catalyst is heated to a temperature between 150°C and 400°C.

6. Process according to Claim 5,
**characterized in that**
the gas mixture used in the first process step also comprises 0.5 to 15% by volume of water vapor.

7. Process according to Claim 1,
**characterized in that**
the gas mixture used in the second process step comprises 0.05 to 35% by volume of nitrogen oxides, 5 to 50% by volume of oxygen and 5 to 30% by volume of water vapor.

8. Process according to Claim 7,
**characterized in that**
the gas mixture used in the second process step also comprises 5 to 20% by volume of carbon dioxide.

9. Process according to Claim 1,
**characterized in that**
the nitrogen oxide storage catalyst is part of an emission control system on a vehicle with a lean-burn engine, and the catalyst is deinstalled from the vehicle to perform the reactivation.

10. Process according to Claim 9,
**characterized in that**
the gas mixture used in the first process step is oxygen-free.

11. Process according to Claim 10,
**characterized in that**
the treatment of the catalyst in the first process step lasts 0.2 to 12 hours, the treatment of the catalyst in the second process step 0.1 to 5 hours.

12. Process according to Claim 1,
**characterized in that**
the nitrogen oxide storage catalyst is part of an emission control system on a vehicle with a lean-burn engine and exhaust gas recycling, and the gas mixtures required for reactivation are formed by the exhaust gas of the internal combustion engine.

13. Process according to Claim 12,
**characterized in that**
the gas mixture used in the first process step is exhaust gas from the lean-burn engine with an air ratio λ < 1.

14. Process according to Claim 13,
**characterized in that**
the gas mixture used in the second process step is exhaust gas from the lean-burn engine with a nitrogen dioxide content of 0.02 to 2% by volume.

15. Process according to Claim 14,
**characterized in that**
the gas mixture used in the second process step is exhaust gas from the lean-burn engine with a carbon dioxide content of 5 to 20% by volume.

16. Process according to Claim 2,
**characterized in that**
the nitrogen oxide storage catalyst is part of an emission control system on a vehicle with a lean-burn engine, and the gas mixtures required for reactivation are formed by the exhaust gas of the internal combustion engine and additionally components introduced into the exhaust gas line.

17. Process according to Claim 16,
**characterized in that**
ammonia is additionally introduced into the exhaust gas line in the first process step.

## Revendications

1. Procédé de réactivation d'un catalyseur à accumulation d'oxyde d'azote vieilli thermiquement, qui comprend en tant que composant catalytiquement actif, outre du platine, des composés de strontium ou de baryum ou des composés de strontium et de baryum basiques sur un matériau support contenant de l'oxyde de cérium, et qui contient par ailleurs des composés de strontium et/ou de baryum formés par vieillissement thermique avec le matériau support incluant du platine, et qui est utilisé pour la purification de gaz d'échappement d'une automobile à moteur à mélange pauvre, **caractérisé en ce que** le catalyseur est porté lors d'une première étape de procédé à une température comprise entre 100°C et 500 °C dans un mélange gazeux contenant un réducteur, puis, lors d'une seconde étape de procédé décalée dans le temps, traité avec un mélange gazeux contenant du dioxyde d'azote et de la vapeur d'eau à des températures comprises entre 300°C et 500 °C.

2. Procédé selon la revendication 1, **caractérisé en ce que** le mélange gazeux utilisé lors de la première étape de procédé contient en tant que réducteur de l'hydrogène ou du monoxyde de carbone ou de l'ammoniac ou des hydrocarbures ou leurs mélanges.

3. Procédé selon la revendication 2, **caractérisé en ce que** le mélange gazeux utilisé lors de la première étape de procédé contient 0,5 à 15 % en volume d'hydrogène et le catalyseur est porté à une température comprise entre 150°C et 400 °C.

4. Procédé selon la revendication 2, **caractérisé en ce que** le mélange gazeux utilisé lors de la première étape de procédé contient 0,1 à 15 % en volume d'hydrocarbures et le catalyseur est porté à une température comprise entre 300°C et 500 °C.

5. Procédé selon la revendication 2, **caractérisé en ce que** le mélange gazeux utilisé lors de la première étape de procédé contient 0,5 à 15 % en volume de monoxyde de carbone et le catalyseur est porté à une température comprise entre 150°C et 400 °C.

6. Procédé selon la revendication 5, **caractérisé en ce que** le mélange gazeux utilisé lors de la première étape de procédé contient également 0,5 à 15 % en volume de vapeur d'eau.

7. Procédé selon la revendication 1, **caractérisé en ce que** le mélange gazeux utilisé lors de la seconde étape de procédé contient 0,05 à 35 % en volume d'oxydes d'azote, 5 à 50 % en volume d'oxygène et 5 à 30 % en volume de vapeur d'eau.

8. Procédé selon la revendication 7, **caractérisé en ce que** le mélange gazeux utilisé lors de la seconde étape de procédé contient également 5 à 20 % en volume de dioxyde de carbone.

9. Procédé selon la revendication 1, **caractérisé en ce que** le catalyseur à accumulation d'oxyde d'azote fait partie d'une unité de purification des gaz d'échappement d'une automobile à moteur à mélange pauvre et le catalyseur est démonté de l'automobile pour la réalisation de la réactivation.

10. Procédé selon la revendication 9, **caractérisé en ce que** le mélange gazeux utilisé lors de la première étape de procédé est exempt d'oxygène.

11. Procédé selon la revendication 10, **caractérisé en ce que** le traitement du catalyseur lors de la première étape de procédé dure 0,2 à 12 heures, le traitement du catalyseur lors de la seconde étape de procédé 0,1 à 5 heures.

12. Procédé selon la revendication 1, **caractérisé en ce que** le catalyseur à accumulation d'oxyde d'azote fait partie d'une unité de purification des gaz d'échappement d'une automobile à moteur à mélange pauvre et recyclage des gaz d'échappement et les mélanges gazeux nécessaires pour la réactivation sont formés par le gaz d'échappement du moteur à combustion.

13. Procédé selon la revendication 12, **caractérisé en ce que** le mélange gazeux utilisé lors de la première étape de procédé est un gaz d'échappement du moteur à mélange pauvre ayant un taux d'air λ < 1.

14. Procédé selon la revendication 13, **caractérisé en ce que** le mélange gazeux utilisé lors de la seconde étape de procédé est un gaz d'échappement du moteur à mélange pauvre ayant une teneur en dioxyde d'azote de 0,02 à 2 % en volume.

15. Procédé selon la revendication 14, **caractérisé en ce que** le mélange gazeux utilisé lors de la seconde étape de procédé est un gaz d'échappement du moteur à mélange pauvre ayant une teneur en dioxyde de carbone de 5 à 20 % en volume.

16. Procédé selon la revendication 2, **caractérisé en ce que** le catalyseur à accumulation d'oxyde d'azote fait partie d'une unité de purification des gaz d'échappement d'une automobile à moteur à mélange pauvre et les mélanges gazeux nécessaires pour la réactivation sont formés par le gaz d'échappement du moteur à combustion et également par des composants introduits dans la conduite d'échappement.

17. Procédé selon la revendication 16, **caractérisé en ce que** de l'ammoniac est également introduit dans la conduite d'échappement lors de la première étape de procédé.
